Europäisches Patentamt

European Patent Office

Office européen des brevets

(19)

(11) Veröffentlichungsnummer: **0 017 657**
**B1**

(12) **EUROPÄISCHE PATENTSCHRIFT**

(45) Veröffentlichungstag der Patentschrift:
27.10.82

(21) Anmeldenummer: **79101525.8**

(22) Anmeldetag: **19.05.79**

(51) Int. Cl.³: **F 01 K 23/06,** F 02 C 3/20,
F 02 C 1/04, F 22 B 31/00

(54) Kombinierte Wärmekraftanlage.

(30) Priorität: **12.04.79 CH 3495/79**

(43) Veröffentlichungstag der Anmeldung:
**29.10.80 Patentblatt 80/22**

(45) Bekanntmachung des Hinweises auf die Patenterteilung:
**27.10.82 Patentblatt 82/43**

(84) Benannte Vertragsstaaten:
**BE DE FR GB NL SE**

(56) Entgegenhaltungen:
**EP-A-0 001 569**
**FR-A-2 323 873**
**GB-A-1 478 532**
**GB-A-1 498 814**
**US-A-4 116 005**

(73) Patentinhaber: **GEBRÜDER SULZER
AKTIENGESELLSCHAFT, Zürcherstrasse 9,
CH-8401 Winterthur (CH)**

(72) Erfinder: **Aguet, Emile, Zinzikerbergstrasse 9,
CH-8404 Winterthur (CH)**

(74) Vertreter: **Sparing, Nikolaus, Dipl.-Ing.,
Rethelstrasse 123, D-4000 Düsseldorf 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Kombinierte Wärmekraftanlage

Die Erfindung betrifft eine Wärmekraftanlage nach dem Oberbegriff des Patentanspruchs 1. Die Kombination von Gasturbinen mit Dampfkraftanlagen erlaubt, einen Gesamtwirkungsgrad zu erzielen, der oberhalb des Wirkungsgrades des reinen Dampfprozesses liegt. Eine Voraussetzung für die Anwendung solcher kombinierter Kraftanlagen besteht aber darin, daß die hinsichtlich Verschmutzung und Verschleiß empfindliche Gasturbine mit sauberen, aschefreien Gasen beschickt wird. Ausgangspunkt der Erfindung ist eine kombinierte Wärmekraftanlage, bei der das Arbeitsmedium der Gasturbine nicht durch interne Verbrennung eines unsauberen Brennstoffes, sondern hauptsächlich durch Wärmeübertragung erhitzt wird und daher als praktisch saubere Luft durch die Gasturbine strömt. Dem Vorteil einer solchen Anlage, beliebige Brennstoffe einsetzen zu können, stehen die Nachteile höherer Investitionskosten sowie — wegen des unvermeidlichen Druckabfalls im Lufterhitzer — eines etwas geringeren Wirkungsgrades der Gasturbinengruppe gegenüber.

Eine Wärmekraftanlage gemäß dem Oberbegriff des Anspruchs 1 ist aus Fig. 1 der US-A-4 116 005 bekannt. Gemäß Fig. 2 dieser US-Patentschrift ist die Anlage so abgewandelt, daß sich die von dem Gasturbinenaustritt kommende Leitung in zwei Zweige teilt, von denen der eine Zweig zu einem befeuerten Wärmeübertrager führt, der nur die Lufterhitzungsheizfläche des geschlossenen Systems aufweist, wogegen der andere Zweig zu einem ebenfalls befeuerten Wärmeübertrager führt, der die Dampferzeugerheizfläche enthält. Die Feuerungen der beiden Wärmeübertrager sind Wirbelbettfeuerungen, und der Zweck der Schaltung nach Fig. 2 der US-A-4 116 005 besteht darin, die Verteilung der Verbrennungswärme auf die verdichtete Luft und auf das Arbeitsmittel des Dampfkreislaufes beeinflussen zu können.

Demgegenüber liegt der Erfindung die Aufgabe zugrunde, eine kombinierte Wärmekraftanlage der eingangs genannten Art unter Vermeidung der weiter oben erwähnten Nachteile hinsichtlich ihres Wirkungsgrades zu verbessern.

Diese Aufgabe wird erfindungsgemäß durch die im Kennzeichen des Anspruchs 1 genannten Merkmale gelöst. Durch das Zuführen eines Teils der in der Gasturbine entspannten Luft in den Abwärmeübertrager wird nur der andere Teil der die Gasturbine verlassenden Luftmenge zur Verbrennung von unsauberem Brennstoff verwendet. Der erstgenannte Teil der Luft, in dem gegebenenfalls kurzzeitig eine verhältnismäßig kleine Menge sauberen Brennstoffes verbrannt werden kann, z. B. beim Anfahren, läßt sich bis in den Bereich des hier tief liegenden Taupunktes, gegebenenfalls sogar tiefer, abkühlen. Dies führt zu einem sehr geringen Abgasverlust, der für die Verbesserung des Gesamtwirkungsgrades der Anlage von erheblicher Bedeutung ist. Ein zusätzlicher Vorteil der erfindungsgemäßen Schaltung liegt darin, daß der Rauchgasfilter am Austritt des Dampferzeugers für eine erheblich geringere Abgasmenge ausgelegt werden kann. Schließlich kann auch der Kamin für die Dampferzeuger-Rauchgase kleiner bemessen werden; die Abgase des Abwärmeübertragers lassen sich über einen niedrigen Abgasstutzen ausblasen, da sie ökologisch unschädlich sind.

Durch zweckmäßige Aufteilung des Speisewassers auf den Dampferzeuger und den Abwärmeübertrager lassen sich die Abgase des Abwärmeübertragers auf unter 100° C, beispielsweise auf 50° C zurückkühlen. Besonders tief lassen sich die Abgase des Abwärmeübertragers zurückkühlen, wenn in ihm ausschließlich die Abwärme der Gasturbine ausgenützt wird, d. h. wenn er keine Zusatzfeuerung aufweist, so daß keine Kohlenwasserstoffe, die zu einer Erhöhung des Taupunktes führen würden, im abgezweigten Luftstrom verbrannt werden.

Weitere Vorteile ergeben sich, wenn die Feuerung des Dampferzeugers als Wirbelbettfeuerung ausgebildet ist, die gestattet, durch Zugabe von schwefelbindenden Stoffen den $SO_2$- und $SO_3$-Gehalt der Abgase erheblich zu reduzieren. Eine günstige Eigenschaft der Wirbelbettfeuerung liegt überdies darin, daß wegen der tiefen Verbrennungstemperatur der $NO_x$-Gehalt der Abgase klein ist.

Durch Anordnung mindestens eines ersten Teils des geschlossenen Wärmeübertragungssystems der Gasturbine im unteren Teil des Wirbelbettes wird gewährleistet, daß die Gasturbinen-Eintrittstemperatur auch bei Teillast der Anlage genügend hoch ist.

Die Enderhitzung der im Verdichter der Gasturbinen-Gruppe verdichteten Luft geschieht zweckmäßig in einem oberhalb des Wirbelbettes angeordneten zweiten Teil des Wärmeübertragungssystems, da auf diese Weise der Werkstoff dieser Heizfläche thermisch weniger hoch beansprucht ist. Im Wirbelbett wird, vorzugsweise oberhalb des ersten Teils des Wärmeübertragungssystems eine Verdampferheizfläche des Dampferzeugers angeordnet, was wegen der wasserseitig hohen Wärmeübergangszahl zu erträglichen Temperaturen im Werkstoff dieser Heizfläche führt.

Wird im Gaszug des Dampferzeugers stromunterhalb des zweiten Teils des Wärmeübertragungssystems eine weitere Verdampferheizfläche vorgesehen, die der im Wirbelbett angeordneten Verdampferheizfläche nachgeschaltet ist, so bringt dies Vorteile bezüglich des Lastverhaltens des Dampferzeugers.

Dadurch, daß zwischen der weiteren Verdampferheizfläche und dem zweiten Teil des Wärmeübertragungssystems eine Überhitzerheizfläche für den in den Verdampferheizflächen erzeugten Dampf vorgesehen wird, sind keine starke Korrekturen der Frischdampftemperaturen, beispielsweise durch Einspritzung von Wasser in den Dampf, nötig.

Sind Mittel vorhanden, durch die im Wirbelbett die Grenzfläche des beendeten Ausbrandes im Bereich der im Wirbelbett angeordneten Verdampferheizfläche in vertikaler Richtung verschoben werden kann, so läßt sich die Dampfproduktion des Dampferzeugers lastabhängig so einstellen, daß eine Wassereinspritzung in den überhitzten Dampf nur noch zur Korrektur von dynamischen Störungen nötig ist.

Durch das Anordnen eines Saugzuggebläses am Austritt des Dampferzeuger-Rauchgaskanals lassen sich die gesamten gasseitigen Druckverluste minimieren und zudem die Einführung von Kohle und Zuschlagstoffen in das Wirbelbett erleichtern.

Einige Ausführungsbeispiele der Erfindung werden in der folgenden Beschreibung anhand der Zeichnung näher erläutert. Es zeigt

Fig. 1 das Schema einer erfindungsgemäßen Wärmekraftanlage, bei der der Abwärmeübertrager ausschließlich als Dampferzeuger ausgebildet ist,

Fig. 2 das Schema einer abgewandelten Wärmekraftanlage, bei der der Abwärmeübertrager statt der Dampferzeugung der Erhitzung der Verbrennungsluft dient, und

Fig. 3 ein Detail zu Fig. 2.

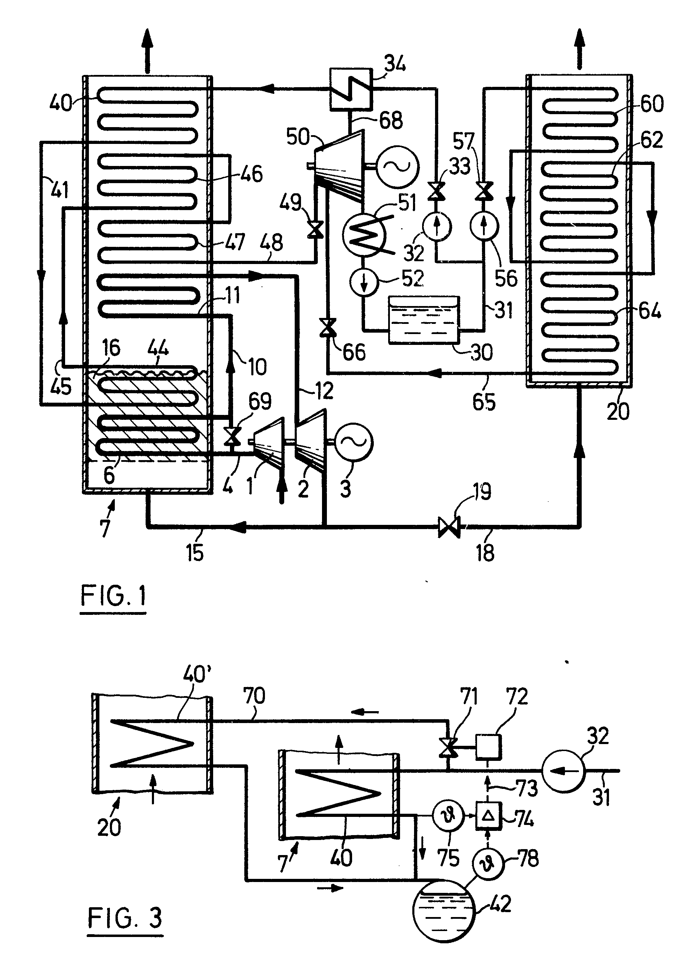

In Fig. 1 fördert ein Verdichter 1, der mit einer Gasturbine 2 und einem Generator 3 auf derselben Welle sitzt, über eine Leitung 4 verdichtete Luft in einen ersten Teil 6 eines in einem Dampferzeuger 7 angeordneten, geschlossenen Wärmeübertragungssystems. Der Austritt des ersten Teils 6 ist über eine Leitung 10 mit einem zweiten Teil 11 des geschlossenen Wärmeübertragungssystems verbunden. Vom Austritt des zweiten Teils 11 führt eine Heißluftleitung 12 zum Eintritt der Gasturbine 2. Der Austritt der Gasturbine 2 teilt sich in eine Zuleitung 15 zur Feuerung 16 des Dampferzeugers 7 und in eine Zweigleitung 18, die zu einem Abwärmeübertrager 20 führt. Die Feuerung 16 des Dampferzeugers 7 ist als Wirbelbett ausgebildet; in Fig. 1 ist die Masse der quirlend verbrennenden Brennstoffkörner durch Schraffur angedeutet. Der erste Teil 6 ist im unteren Bereich des Wirbelbettes 16 und der zweite Teil 11 oberhalb dieses Bettes im Rauchgaszug des Dampferzeugers angeordnet. Der Dampferzeuger 7 enthält ferner die Heizflächen 40, 44, 46 und 47 eines Dampfkreislaufes, der mit Wasser aus einem Speisewasserbehälter 30 über eine Speiseleitung 31 beschickt wird. Die Speiseleitung 31 enthält eine Speisepumpe 32, ein Speiseventil 33 und einen Hochdruckvorwärmer 34 und führt zu einem im Dampferzeuger 7 angeordneten Economiser 40. Der Austritt des Economisers 40 ist über eine Verbindungsleitung 41 an einen im Wirbelbett 16 angeordneten ersten Verdampfer 44 angeschlossen. Dessen Austritt führt über eine Leitung 45 zu einem zweiten Verdampfer 46, der seinerseits mit einem arbeitsmittelseitig nachgeschalteten Überhitzer 47 verbunden ist. Der Austritt des Überhitzers 47 ist über eine Frischdampfleitung 48 mit Frischdampfventil 49 an eine Dampfturbine 50 angeschlossen, deren Austritt zu einem Kondensator 51 führt. Das Kondensat aus dem Kondensator 51 gelangt mittels einer Kondensatpumpe 52 in den Speisewasserbehälter 30. Die zum Abwärmeübertrager 20 führende Zweigleitung 18 weist ein Drosselorgan 19 auf. Im Abwärmeübertrager 20 ist ein Economiser 60 angeordnet, der mit Wasser aus der Speiseleitung 31 über eine Speisepumpe 56 und ein Speiseventil 57 beschickt wird. An den Economiser 60 schließt sich — ebenfalls im Abwärmeübertrager 20 angeordnet — ein Verdampfer 62 und ein Überhitzer 64 an. Vom Austritt des Überhitzers 64 führt eine Frischdampfleitung 65 mit Ventil 66 zu einer Einspeisestelle der Dampfturbine 50. Im unteren Druckbereich dieser Turbine 50 ist eine Anzapfleitung 68 für den Hochdruckvorwärmer 34 vorgesehen. An den ersten Teil 6 des geschlossenen Wärmeübertragungssystems ist eine diesen Teil umgehende Bypassleitung mit Bypassventil 69 angeordnet.

Im Betrieb wird die vom Verdichter 1 angesaugte Luft mit einem Druck von 8 bar in den ersten Teil 6 eingespeist und darin auf etwa 700°C erhitzt. Eine weitere Erhitzung dieser Luft erfolgt im zweiten Teil 11, woraufhin die Luft in der Gasturbine 2 auf etwa 1,03 bar bei etwa 413°C entspannt wird. Die aus der Gasturbine austretende heiße Luft wird einerseits über die Leitung 15 dem Wirbelbett 16 und andererseits über die Zweigleitung 18 dem Abwärmeübertrager 20 zugeführt. Das Wirbelbett 16 wird mit Kohle und Kalkpulver beschickt. Die Kohle verbrennt, wobei der freiwerdende Schwefel durch den Kalk zu Gips gebunden wird. Gips und Schlacke werden auf nicht gezeichnete Weise seitlich ausgetragen. Die Abgase des Wirbelbettes werden im zweiten Teil 11, im Überhitzer 47, im zweiten Verdampfer 46 und schließlich im Economiser 40 auf ca. 150°C abgekühlt und gegebenenfalls in einem nicht gezeichneten Entstauber gereinigt, bevor sie dem Kamin zugeführt werden. Die dem Abwärmeübertrager 20 zugeführte heiße Luft wird in diesem auf rund 50°C zurückgekühlt. Der Verdampfer 62 ist so angeordnet, daß die darin sich bildenden Dampfblasen mit der Strömung des Dampf-Wasser-Gemischs aufsteigen.

Die Zweigleitung 18 führt bei Vollast mindestens 30% der aus der Gasturbine 2 austretenden Luftmenge. Da die den Abwärmeübertrager 20 durchströmende Luft auf eine verhältnismäßig tiefe Temperatur gekühlt werden kann, weil sie kein Verbrennungswasser und kein $SO_2$ enthält, sind die Gesamtabgasverluste der Anlage sehr gering. Es resultiert daraus ein ungewöhnlich hoher thermischer Wirkungsgrad. Ein zusätzlicher Vorteil der Anordnung ist darin zu sehen, daß durch Betätigen des Drosselorgans 19 die zum Wirbelbett 16 geführte Luftmenge beliebig und sehr rasch verändert werden kann, so daß entsprechend der Last, d. h. der eingeführten Brennstoffmenge und der im Wirbelbett abgegebenen Wärmemenge die gewünschte Verbrennungstemperatur leicht eingestellt werden kann. Ein weiterer Regeleingriff zur Beeinflussung der Verbrennungstemperatur kann durch Betätigen des Bypassventils 69 erfolgen.

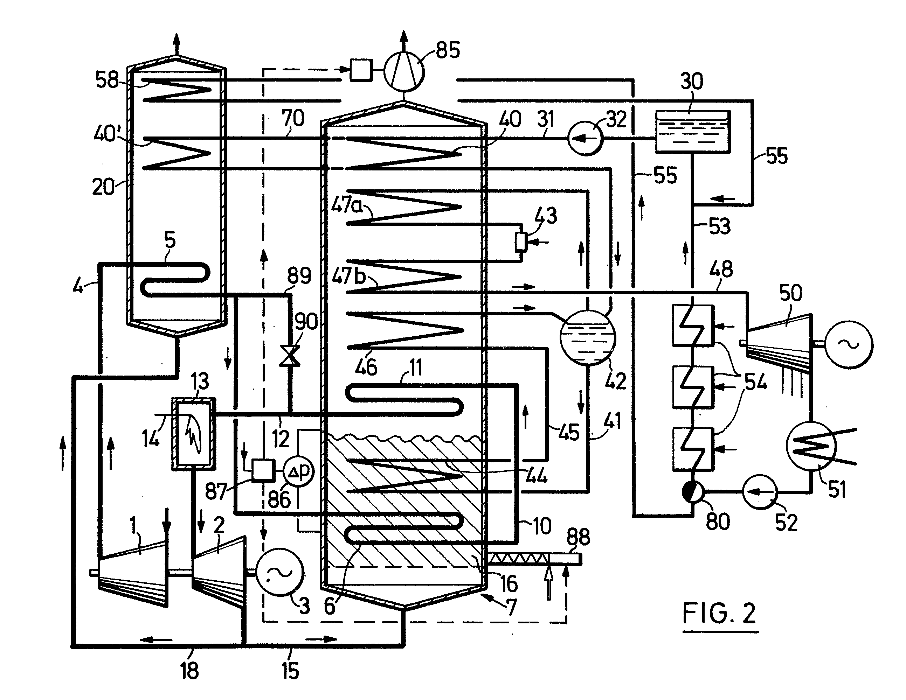

Beim Ausführungsbeispiel nach Fig. 2 strömt die verdichtete Luft über einen im Abwärmeübertrager 20 angeordneten Vorerhitzer 5 zum ersten, im Wirbelbett 16 angeordneten Teil 6 des geschlossenen Wärmeübertragungssystems. Außerdem ist in der zur Gasturbine 2 führenden Heißluftleitung 12 eine Brennkammer 13 mit Brenngaszufuhrleitung 14 angeordnet. Ein weiterer Unterschied zur Anlage nach Fig. 1 besteht darin, daß der durch den Dampferzeuger 7 führende Dampfkreislauf mit einer Dampf/Wasser-Trommel 42 ausgerüstet ist, an der die Verdampfer 44 und 46 in Naturumlaufschaltung angeschlossen sind. Überdies ist der Überhitzer 47, der hier im Gasstrom unterhalb des zweiten Verdampfers 46 liegt, in zwei Sektionen 47a und 47b unterteilt, zwischen denen eine Wassereinspritzstelle 43 zwischengeschaltet ist, um die Dampftemperatur zu beeinflussen.

In der von der Kondensatpumpe 52 zum Speisewásserbehälter 30 führenden Kondensatleitung 53 sind sodann drei Kondensatvorwärmer 54 vorgesehen, zu denen über eine Leitung 55 ein im Abwärmeübertrager 20 an letzter Stelle angeordneter Niedertemperaturvorwärmer 58 für das Kondensat parallel geschaltet ist. An der Abzweigstelle der Leitung 55 ist ein Verteilventil 80 vorgesehen, das in nicht näher dargestellter Weise von der Temperatur der Luft am Austritt des Abwärmeübertragers 20 verstellt wird. Weiter ist im Abwärmeübertrager 20 zwischen dem Vorerhitzer 5 und dem Niedertemperaturvorwärmer 58 ein Economiser 40' angeordnet, der dem im Dampferzeuger 7 befindlichen Economiser 40 parallel geschaltet ist. Wie in Fig. 3 beispielsweise dargestellt ist, kann in der Zuleitung 70 zum Economiser 40' des Abwärmeübertragers 20 ein Ventil 71 angeordnet sein. Dieses Ventil 71 wird von einem Regler 72 betätigt, der ein Regelsignal über eine Leitung 73 von einem Differenzglied 74 empfängt. Die beiden Eingänge dieses Differenzgliedes 74 sind mit je einem Temperaturfühler 75 und 78 verbunden, der die Austrittstemperatur des Economisers 40 bzw. die Dampftemperatur in der Trommel 42 erfaßt. Durch diese Schaltung wird erreicht, daß der Durchfluß durch den Economiser 40 stets so bemessen ist, daß in ihm mit Sicherheit keine Verdampfung auftritt. Im Economiser 40' ist wegen des relativ hohen Wasserdruckes und der tiefen Lufttemperatur Verdampfung von vornherein ausgeschlossen.

Bei der Anlage nach Fig. 2 ist am Gasaustritt des Dampferzeugers 7 ein Saugzuggebläse 85 angeordnet, dessen Fördermenge lastabhängig beeinflußt werden kann, so daß dieses Gebläse die Verteilfunktion des Drosselorgans 19 in Fig. 1 erfüllt. Zur lastabhängigen Beeinflussung der Fördermenge ist ein auf das Niveau des Wirbelbettes ansprechendes Meßorgan 86 vorgesehen, z. B. ein Druckdifferenzempfänger, das über einen Regler 87 mit verstellbarem Sollwert auf das Saugzuggebläse 85 und damit auf die Brennluftzufuhr in dem Sinne einwirkt, daß bei steigendem Niveau die Luftzufuhr vergrößert wird. Zusätzlich zu oder an Stelle dieser Einwirkung kann der Regler 87 ein entsprechendes Signal auf die Kohle- und Kalkzufuhr 88 des Wirbelbettes 16 geben; bei steigendem Niveau wird dann die Brennstoffzufuhr verkleinert. Durch dieses Saugzuggebläse 85 werden die gesamten Druckverluste herabgesetzt und damit der Wirkungsgrad der Anlage erhöht.

Zwischen dem Vorerhitzer 5 und dem ersten Teil 6 zweigt eine Bypassleitung 89 mit Bypassventil 90 ab, die in die Heißluftleitung 12 mündet, also den ersten Teil 6 und den zweiten Teil 11 des geschlossenen Wärmeübertragunssystems umgeht. Die Leitung 89 ersetzt die Bypassleitung mit dem Bypassventil 69 in Fig. 1 und erlaubt raschere Temperaturkorrekturen der Heißluft vor dem Eintritt in die Gasturbine 2. Sie bedingt ein Mischstück an der Mündungsstelle der Leitung 89, falls in der Brennkammer 13 keine ausreichende Mischung gewährleistet wird.

Die Anlage nach Fig. 2 und 3 funktioniert im Prinzip gleich wie die in Fig. 1, jedoch mit dem Unterschied, daß im Abwärmeübertrager 20 weder Dampf produziert noch überhitzt wird. Der gesamte Dampf wird somit bei hohem Druck erzeugt, was bedeutet, daß relativ zur Dampfproduktion weniger Kondensationswärme abgegeben wird als im Falle der Anlage nach Fig. 1. Der Wirkungsgrad der Anlage nach Fig. 2 ist daher höher als der nach Fig. 1.

Grundsätzlich läßt sich die Luft im Abwärmeübertrager 20 — sofern die Brennkammer 13 nicht befeuert wird — bis auf die Luftansaugtemperatur abkühlen, ohne daß Nebelbildung bzw. Kondensation auftritt. Einer solch tiefen Abkühlung sind aber Grenzen gesetzt durch die Temperatur des Kondensats und durch den vertretbaren Aufwand für die Größe des Niedertemperaturvorwärmers 58.

Die Wände des Dampferzeugers 7 und des Abwärmeübertragers 20 sind, wie in der Dampferzeugertechnik üblich, vorzugsweise als dichtgeschweißte Rohrwände ausgebildet und auf nicht näher dargestellte Weise als Economiser oder Verdampfer in den Dampferzeugerkreislauf eingeschaltet.

## Patentansprüche

1. Kombinierte Wärmekraftanlage mit einem eine Feuerung (16) aufweisenden Dampferzeuger (7) und einer Gasturbinengruppe (1, 2), wobei der Verdichteraustritt der Gasturbinengruppe über ein geschlossenes, im Dampferzeuger angeordnetes Wärmeübertragungssystem (6, 11) mit dem Eintritt der Gasturbine (2) und der Austritt der Gasturbine (2) mit der Feuerung (16) des Dampferzeugers (7) verbunden sind, dadurch gekennzeichnet, daß am Austritt der Gasturbine (2) über eine Zweigleitung (18) zusätzlich ein Abwärmeübertrager (20) angeschlossen ist, dessen Wärmeübertragungsflächen so bemessen sind, daß die aus ihm austretenden Abgase tiefer abgekühlt werden als die aus dem Dampferzeuger (7) austretenden Rauchgase.

2. Wärmekraftanlage nach Anspruch 1, dadurch gekennzeichnet, daß die Abgase des Abwärmeübertragers (20) bei Normalbetrieb auf unter 100° C zurückgekühlt werden.

3. Wärmekraftanlage nach Anspruch 1 oder 2, dadurch gekennzeichnet, daß im Abwärmeübertrager (20) ausschließlich die Abwärme der Gasturbine (2) ausgenützt wird.

4. Wärmekraftanlage nach einem der Ansprüche 1 bis 3, dadurch gekennzeichnet, daß die Feuerung (16) des Dampferzeugers (7) als Wirbelbettfeuerung ausgebildet ist.

5. Wärmekraftanlage nach Anspruch 4, dadurch gekennzeichnet, daß mindestens ein Teil (6) des geschlossenen Wärmeübertragungssystems (5, 6, 11) der Gasturbinengruppe (1, 2) innerhalb des Wirbelbettes (16) angeordnet ist.

6. Wärmekraftanlage nach Anspruch 5, dadurch gekennzeichnet, daß ein erster Teil (6) des geschlossenen Wärmeübertragungssystems (5, 6, 11) in einem unteren Bereich des Wirbelbettes (16) und ein zweiter Teil (11) des geschlossenen Wärmeübertragungssystems im Rauchgaszug des Dampferzeugers (7) angeordnet sind und daß außerdem im Wirbelbett (16) eine Verdampferheizfläche (44) des Dampferzeugers (7) angeordnet ist, die sich oberhalb des ersten Teils (6) des geschlossenen Wärmeübertragungssystems befindet.

7. Wärmekraftanlage nach Anspruch 6, dadurch gekennzeichnet, daß außer der im Wirbelbett (16) angeordneten Verdampferheizfläche (44) eine weitere Verdampferheizfläche (46) vorgesehen ist, die im Rauchgaszug des Dampferzeugers (7) liegt, vorzugsweise bezüglich der Rauchgase stromunterhalb des zweiten Teils (11) des geschlossenen Wärmeübertragungssystems.

8. Wärmekraftanlage nach Anspruch 7, dadurch gekennzeichnet, daß im Rauchgaszug des Dampferzeugers (7) zwischen der weiteren Verdampferheizfläche (46) und dem zweiten Teil (11) des geschlossenen Wärmeübertragungssystems eine Überhitzerheizfläche (47) für den in den Verdampferheizflächen (44, 46) erzeugten Dampf vorgesehen ist.

9. Wärmekraftanlage nach einem der Ansprüche 6 bis 8, dadurch gekennzeichnet, daß Mittel (86, 87, 88) vorgesehen sind, durch die im Wirbelbett (16) die Grenzfläche des beendeten Ausbrandes im Bereich der im Wirbelbett angeordneten Verdampferheizfläche (44) in vertikaler Richtung lastabhängig verschoben werden kann.

10. Wärmekraftanlage nach einem der Ansprüche 4 bis 9, dadurch gekennzeichnet, daß am Rauchgasaustritt des Dampferzeugers (7) ein Saugzuggebläse (85) angeordnet ist.

11. Wärmekraftanlage nach einem der Ansprüche 1 bis 10, dadurch gekennzeichnet, daß die Verteilung des aus der Gasturbine (2) austretenden Gasstromes auf die Feuerung (16) des Dampferzeugers (7) und den Abwärmeübertrager (20) einstellbar ist.

## Claims

1. A combined thermal power plant comprising a steam generator (7) with a furnace (16), and a gas turbine group (1, 2), the gas turbine group compressor outlet being connected, via a closed heat-exchange system (6, 11) disposed in the steam generator, to the inlet of the gas turbine (2) and the outlet of the gas turbine (2) being connected to the furnace (16) of the steam generator (7), characterised in that a waste heat exchanger (20) is additionally connected to the outlet of the gas turbine (2) via a branch line (18) and its heat exchange surfaces are so dimensioned that the waste gases emerging therefrom are cooled to a lower temperature than the flue gases leaving the steam generator (7).

2. A thermal power plant according to claim 1, characterised in that the waste gases of the waste heat exchanger (20) are cooled to below 100° C in normal operation.

3. A thermal power plant according to claim 1 or 2 characterised in that only the waste heat of the gas turbine (2) is used in the waste heat exchanger (20).

4. A thermal power plant according to any one of claims 1 to 3, characterised in that the fornace (16) of the steam generator (7) is constructed as a fluidized bed furnace.

5. A thermal power plant according to claim 4, characterised in that at least part (6) of the closed heat exchange system (5, 6, 11) of the gas turbine group (1, 2) is disposed inside the fluidized bed (16).

6. A thermal power plant according to claim 5, characterised in that a first part (6) of the closed heat exchange system (5, 6, 11) is disposed in a bottom zone of the fluidized bed (16) and a second part (11) of the closed heat exchange system is disposed in the flue gas flue of the steam generator (7) and the fluidized bed (16) also contains an evaporator heating surface (44) of the steam generator (7), said surface being situated above the first part (6) of the closed heat exchange system.

7. A thermal power plant according to claim 6, characterised in that another evaporator heating surface (46) is provided in addition to the evaporator heating surface (44) disposed in the fluidized bed (16) and is situated in the flue gas flue of the steam generator (7), preferably downstream of the second part (11) of the closed heat exchange system with respect to the flue gases.

8. A thermal power plant according to claim 7, characterised in that a superheater heating surface (47) for the steam generated in the evaporator heating surfaces (44, 46) is provided in the flue gas flue of the steam generator (7) between the additional evaporator heating surface (46) and the second part (11) of the closed heat exchange system.

9. A thermal power plant according to any one of claims 6 to 8, characterised in that means (86, 87, 88) are provided by means of which the boundary surface of the completed combustion in the region of the evaporator heating surface (44) disposed in the fluidized bed can be shifted vertically in the fluidized bed (16) in dependence upon the load.

10. A thermal power plant according to any one of claims 4 to 9, characterised in that an extractor fan (85) is disposed at the flue gas outlet of the steam generator (7).

11. A thermal power plant according to any one of claims 1 to 10, characterised in that the distribution of the gas flow leaving the gas turbine (2) to the furnace (16) of the steam generator (7) and to the waste heat exchanger (20) is adjustable.

## Revendications

1. Centrale thermique combinée comportant un générateur de vapeur (7) présentant un foyer (16), ainsi qu'un groupe de turbines à gaz (1, 2), la sortie de compresseur du groupe de turbines à gaz étant reliée par un système de transmission thermique (6, 11) disposé dans le générateur de vapeur et fermé à l'entrée de la turbine à gaz (2) et la sortie de la turbine à gaz (2) étant reliée au foyer (16) du générateur de vapeur (7), caractérisée en ce que, à la sortie de la turbine à gaz (2) est raccordé additionnellement par l'intermédiaire d'une conduite d'embranchement (18) un transmetteur de chaleur perdue (20) dont les surfaces de transmission de chaleur sont calculées pour que les gaz perdus qui en sortent soient refroidis davantage que les gaz de fumée sortant du générateur de vapeur (7).

2. Centrale thermique selon la revendication 1, caractérisée en ce que les gaz perdus du transmetteur de chaleur perdue (20) sont, en fonctionnement normal, refroidis en retour à moins de 100°C.

3. Centrale thermique selon la revendication 1 ou 2, caractérisée en ce qu'on emploie exclusivement la chaleur perdue de la turbine à gaz (2) dans le transmetteur de chaleur perdue (20).

4. Centrale thermique selon les revendications 1 à 3, caractérisée en ce que le foyer (16) du générateur de vapeur (7) est sous la forme d'un foyer à lit tourbillonnant.

5. Centrale thermique selon la revendication 4, caractérisée en ce qu'au moins une portion (6) du système de transmission de chaleur fermé (5, 6, 11) du groupe de turbines à gaz (1, 2) est disposées à l'intérieur du lit tourbillonnant (16).

6. Centrale thermique selon la revendication 5, caractérisée en ce qu'une première portion (6) du système fermé de transmission de chaleur (5, 6, 11) est disposée dans une zone inférieure du lit tourbillonnant (16) et une seconde portion (11) du système fermé de transmission de chaleur est disposée dans le conduit de gaz de fumée du générateur de vapeur (7), et en ce qu'en outre on dispose dans le lit tourbillonnant (16) une surface de réchauffement d'évaporateur (44) du générateur de vapeur (7), laquelle se trouve au-dessus de la première portion (6) du système fermé de transmission de chaleur.

7. Centrale thermique selon la revendication 6, caractérisée en ce qu'on prévoit, en plus de la surface de réchauffement d'évaporateur (44) disposée dans le lit tourbillonnant (16), une autre surface d'échauffement d'évaporateur (46) qui se trouve dans le conduit de gaz de fumée du générateur de vapeur (7), de préférence en aval de la seconde portion (11) du système fermé de transmission de chaleur, par rapport aux gaz de fumée.

8. Centrale thermique selon la revendication 7, caractérisée en ce qu'on prévoit dans le conduit de gaz de fumée du générateur de vapeur (7), entre la surface de réchauffement d'évaporateur (46) et la deuxième portion (11) du système fermé de transmission de chaleur, une surface de réchauffement de surchauffeur (47) pour le vapeur produite dans les surfaces de réchauffement d'évaporateur (44, 46).

9. Centrale thermique selon l'une des revendications 6 à 8, caractérisée en ce qu'on prévoit des moyens (86, 87, 88) pour pouvoir déplacer verticalement en fonction de la charge dans le lit tourbillonnant (16) la face limite de la combustion achevée dans la zone de la face de réchauffement d'évaporateur (44) disposée dans le lit tourbillonnant.

10. Centrale thermique selon l'une des revendications 4 à 9, caractérisée en ce qu'on dispose une soufflante d'aspiration (85) à la sortie de gaz de fumée du générateur de vapeur (7).

11. Centrale thermique selon l'une des revendications 1 à 10, caractérisée en ce que la répartition du débit de gaz sortant de la turbine à gaz (2) sur le foyer (16) du générateur de vapeur (7) et sur le transmetteur de chaleur perdue (20) est réglable.

FIG. 1

FIG. 3

FIG. 2